# EUROPEAN PATENT APPLICATION

(11) **EP 1 688 234 A2**
(43) Date of publication of application: **09.08.2006**
(21) Application number: 05113082.1
(22) Date of filing: 30.12.2005
(51) Int. Cl.: B29C 49/48, B29C 49/64, B29C 49/06, B29C 49/12, B29C 49/18

(54) **A process for forming a container by stretch blow molding and container formed thereby**

(30) Priority: 04.02.2005 EP 05075290
(71) Applicant: THE PROCTER & GAMBLE COMPANY, Cincinnati, Ohio 45202 (US)
(72) Inventor: Connolly, William John, Windlesham Surrey GU20 6AG (GB); Etesse, Patrick Jean-François, 1040 Etterbeek (BE)
(74) Representative: Mather, Peter Geoffrey

(57) **Abstract**

The present invention relates to process for forming a container by stretching and blow-molding a preform within a mold cavity comprising the steps of:
(i) introducing a preform into the mold cavity and stretching the preform with a stretch rod;
(ii) increasing the pressure within the preform so that the preform expands within the mold cavity in a blowing step;
(iii) at least one inwardly moving mold section within the mold cavity so that the expanding preform is deformed by the inwardly moving mold section;
wherein the glass transition temperature (Tg) of the preform material is at least 10°C below the temperature of the walls of the mold cavity.

The present invention further relates to a stretch blow molded container comprising walls of a thermoplastic polyolefin, the thermoplastic polyolefin having a glass transition temperature of less than 30°C and wherein the container has a degree of asymmetry of at least 1.5.

## Description

Consumer goods such as drinks, foodstuffs, laundry and household cleaning products, shampoo and other personal care products are typically packaged in various forms of containers, such as bottles. Bottles are required to have a certain level of mechanical performance to prevent damage during transport and use, and also provide a level of aesthetic appeal to consumers, in which case transparent, glossy containers are often consumer preferable.

A bottle may also be required to have an asymmetric cross-section. Asymmetric features, such as integral handles, may require secondary stretching by means of moving mold sections.

EP-A-0 346 518, published on 20^{th} December 1989, discloses an injection stretch blow molding process for the production of asymmetric bottles with integral handles. However the process requires that the preform material cools to a temperature below its glass transition temperature upon contact with the inside walls of the blow mold.

However this process results in the material fully freezing on contact with the mould walls, restricting any further stretching or deformation after this point. During the production of highly asymmetric containers, including those with handles produced via moving mould inserts, it is necessary that the preform continues to stretch after initial contact with the mould walls in order to completely fill the cavity areas of greatest stretch. This secondary stretch does not occur in the above patent.

### Summary of the Invention

In the process of the present invention a container is formed by stretching and blow-molding a preform within a mold cavity, the process comprising the steps of:
(i) introducing a preform into the mold cavity and stretching the preform with a stretch rod;
(ii) increasing the pressure within the preform so that the preform expands within the mold cavity in a blowing step;
(iii) at least one inwardly moving mold section within the mold cavity so that the expanding preform is deformed by the inwardly moving mold section;
wherein the glass transition temperature (Tg) of the preform material is at least 10°C below the temperature of the walls of the mold cavity.

Steps (i) and (ii) may take place in any order, or simultaneously.

The present invention further provides a stretch blow molded container comprising walls of a thermoplastic polyolefin, the thermoplastic polyolefin having a glass transition temperature of less than than 30°C, preferably less than 15°C, and more preferably less than 5°C, characterised in that the container has a degree of asymmetry of at least 1.5.

Preferably the process of the present invention uses preforms of thermoplastic polyolefins, such as polyethylene (PE) and polypropylene (PP). A particularly preferred preform material is random co-polymer polypropylene which has a T_{g} of between 0°C and -25°C. This allows the full range of standard mold conditions to be used from highly chilled (2-3°C) to heated (85°C) whilst still allowing the material to chill and solidify, but remain above its T_{g} for further stretching after contact with the mold walls.

In a most preferred embodiment, the preform material also does not show stretch-hardening behaviour, further allowing asymmetric distribution to differing areas of the blow mold.

### Detailed Description of the Invention

By "stretch blow molding" what is meant herein is a process wherein a preformed parison is manufactured via extrusion, injection or compression molding, and either cooled to blow temperature, cooled to room temperature and re-heated, or a combination of the two, before being inserted into a blow mold and formed into the final container. By "stretch blow molded container" what is meant herein is a container made by the process described above.

The most common process for the production of preforms is injection moulding, and hence this process is referred to as "injection stretch blow moulding" or "ISBM". Conventionally high transparency, glossy containers are made from polyethylene terephthalate (PET) by injection stretch blow molding. However, utilizing ISBM for polypropylene results in containers of greatly improved stiffness, drop strength, compression strength, gloss and transparency compared to extrusion blow molded containers of the same material.

By "glass transition temperature" or "Tg", what is meant herein is the point at which amorphous regions of a polymer are converted from a brittle, glasslike state to a rubbery, flexible form.

By "asymmetry of cross-section" is defined herein in terms of the cross-section of the bottle, wherein the cross-section which is generally parallel to a defined base of the bottle is asymmetric at at least some height above the base of the bottle when the bottle is oriented in its standing position. Typically a bottle has a major axis which is generally perpendicular to the base of the bottle, and the cross-section is the profile of the bottle in a plane which is perpendicular to the major axis. The degree of asymmetry of cross-section is defined as the ratio between the smallest and largest distance within this cross section that the preform material will move in stretching to its fmal position on the completed article. Preferably the degree of asymmetry is at least 1.5.

Containers manufactured from thermoplastic polyolefins, including polyethylene (PE) and polypropylene (PP), are conventionally manufactured in an extrusion blow-molding process. In such a process molten polyethylene and polypropylene parisons are blown into the shape of an external mold. The flow properties of these thermoplastic materials are such that the material can flow around a fixed insert within the mold cavity and form an integral handle. However, containers made by extrusion blow-molding of polyethylene exhibit low transparency, and polypropylene containers show low or moderate transparency and generally low impact strength.

A highly significant factor inhibiting the even distribution of material for PET is the glass transition temperature (Tg). The glass transition temperature of PET is about 70-75°C, and the glass transition temperature of PVC is slightly above 80°C, which is below its typical blow temperature (approx. 100-110°C), and above the temperature at which the blow mold will typically be held (usually at 5-25°C). These temperatures mean that the material will drop below its T_{g} almost immediately on contact with the mold walls, fully freezing off and allowing no further flow. Some limited stretching does occur after contact (which can often be seen by very small parallel scratches on the surface), but this is in the order of a few mm, no more. This freezing is disadvantageous when blowing a highly asymmetric container, as contact with the low stretch areas (minor axes) before the high stretch (major axes) is unavoidable, and material would ideally be significantly further redistributed after this initial contact. In the case of the production of integral handles the material is distributed by moving sections of the mold, and post-contact material stretching and flow is essential, making PET a non-ideal material.

Materials such as PET or PVC are generally unsuitable for use in the process of the present invention due to their high T_{g}S, which would require the use of extremely hot molds. According to the present invention it is preferred that the temperature of the walls of the mold cavity is less than 60°C.

If a symmetrical preform is produced and then heated evenly throughout then an asymmetric final bottle design will result in a highly uneven wall thickness as the preform will have been required to stretch further in some directions than others. These thin wall sections will cause greatly reduced compression and impact strength for the fmal bottle.

One solution that has been extensively practiced for use with PET bottles is the introduction of preferential reheating of the preform. This process requires a material to exhibit strain-hardening behaviour. Materials that show strain hardening exhibit a sharp increase in tensile modulus after a certain strain at a specific temperature. This increase is due to orientation crystallisation and is particularly noticeable in PET. As a result, when a preform is free-blown (without a mold to constrain it) under a set internal pressure, the preform will expand a specific amount before hardening, stopping at what is referred to as its natural stretch ratio. By contrast, a preform of a material that does not exhibit strain hardening will continue to expand until its walls become too thin and burst, as it has no natural stretch ratio. Most polymeric materials will show an increase in modulus after strain due simply to molecular orientation and for certain preform geometries and pressures a natural stretch value can be sometime be identified. However, this is not to be confused with true strain hardening, and the resulting free-blow is much more unstable.

During preferential heating areas of the preform that will undergo less stretch during the blowing process are heated more than those that will undergo greater stretch. The resulting increase in temperature in these areas reduces the force required to stretch the material, and also increases its natural stretch ratio. Hence the material stretches quicker and further under the blow pressure, thinning the walls in these sections and redistributing material to areas of higher stretch. The resulting bottle has a more even wall thickness throughout its perimeter.

Preferential reheating relies on the stretch hardening behaviour of PET, and the variation of its natural stretch ratio with temperature. This property is a great advantage in process stability, but is not exhibited by many other materials that are used for ISBM, such as polypropylene. As a result the use of PP in ISBM has been restricted to largely cylindrical containers, and although early attempts were made to utilise preferential heating for homopolymer PP this has not been commercialised as the lack of stretch hardening makes the process ineffective and unstable. Due to the lack of a viable method for asymmetric distribution of the material PP designs have tended to have an asymmetry / aspect ratio of <1.5 as bottles of higher ratios result in a non-ideal wall thickness distribution.

However, the advantage of a natural stretch ratio that PET exhibits becomes a disadvantage when bottles of very high asymmetry are required, such as those with an integral handle, when very specific areas will be stretch significantly more than others that are close by. The variation in stretch ratio that can be achieved via preferential heating is insufficient to achieve the asymmetry in stretch that is required and the material will either 'lock up' short of filling the cavity, exhibit stretch haze, or burst.

The use of a 2-stage blow process with a low-pressure pre-blow then a higher pressure 'finish' blow is also crucial to this secondary redistribution, especially in the case of processes that involve moving mold-sections. An initial pre-blow pressure will allow the preform to expand significantly, usually to 80-90% of the final blow volume, but will not fill out the regions of high stretch (comers etc). As a result minimal solidification will have occurred in these regions and during the movement of the mold further stretch can easily be achieved before finally filling the cavity with a high pressure blow. By contrast, during a single stage process, material will be distributed to all parts of the mold and freeze off, greatly reducing secondary stretching. Equally, timing movement of the mold sections to correspond with a certain point in the expansion of the preform during single stage blow is extremely unreliable.

A particularly preferred process of the present invention comprises two steps: a first blowing step, and, preferably following immediately afterwards, a second blowing step. In the first blowing step inwardly moving jaws within the mold cavity partially grip and fuse the expanding preform. The inward movement of the jaws is completed within the first blowing step. The pressure applied within the preform during the first blowing step is from 1 to 10 bar, preferably from 3 to 8 bar. Thereafter the pressure applied within the preform is increased in the second blowing step. In the second blowing step the pressure is greater than 10 bar, preferably maximum pressure is from 12 to 20 bar.

The container is then ejected from the mold. If required, an additional welding step is carried out using direct heat, indirect infra-red, sonic welding, laser welding (e.g. CO2, Nd:YAG or high power diode laser), ultrasound, spin, radio frequency or any other standard method including those that require additives or fillers for high efficiency. This welded section is then removed, via a range of possible techniques including mechanical stamping, laser cutting or hot stamping, which can be either sequential, parallel to, or part of the welding process.

In a first embodiment of the present invention the material of the preform is redistributed after the material has contacted the wall of the mold.

In alternative embodiments of the present invention the redistribution of material is aided by inverted preferential heating and/or by asymmetric preform.
1) Inverted preferential heating: Standard preferential heating involves increasing the temperature of the preform in areas corresponding to lower stretch. For low-Tg materials that will be re-distributed after contact with the mold walls this process should be inverted, lowering the temperature of regions of lower stretch. Without wishing to be bound by theory this process is likely to be caused by a surface effect. At blow temperatures, low-Tg olefins such as PP are very close to their melt temperatures, and the surface of the preform is soft, slightly sticky, and easily distorted. Slight reductions in temperature will reduce this effect making the surface less intimate in its contact with the mold walls during the low-pressure pre-blow. This allows the material to slide over the surface more easily and further enables distribution of material from these areas to those of higher stretch. This sliding effect can be further facilitated by coating the corresponding surfaces of the mold with slip agents, such as Teflon®. The difference in temperature between areas of the preform that is required to produce this effect is less than 10°C, preferably between 0.5-2°C.
2) Asymmetric preform: The use of oval preforms for ISBM molding is well established although preferential heating is more widely used. For one-step processes with conditioning, but not preferential heating capabilities, asymmetric preforms are used with thinner sections corresponding to areas of higher stretch as these will cool down quicker than the thicker sections, giving an equivalent effect to preferential heating, although at a corresponding higher weight. For non-stretch hardening materials where standard preferential heating techniques are not suitable however, preforms with an oval core section to produce thicker sections corresponding to areas of higher stretch is greatly advantageous.

## Claims

1. A process for forming a container by stretching and blow-molding a preform within a mold cavity comprising the steps of:
(i) introducing a preform into the mold cavity and stretching the preform with a stretch rod;
(ii) increasing the pressure within the preform so that the preform expands within the mold cavity in a blowing step;
(iii) at least one inwardly moving mold section within the mold cavity so that the expanding preform is deformed by the inwardly moving mold section;
**characterised in that** the glass transition temperature (Tg) of the preform material is at least 10°C below the temperature of the walls of the mold cavity.

2. The process according to claim 1 wherein the preform material is a thermoplastic polyolefin having a glass transition temperature (Tg) of less than 30°C, preferably less than 15°C, and more preferably less than 5°C.

3. The process according to claim 2 wherein the preform material is a thermoplastic polyolefin selected from polyethylene, polypropylene or co-polymers thereof.

4. The process according to claim 3 wherein the preform material is a random co-polymer comprising polypropylene, which has a Tg of between 0°C and -25°C.

5. The process according to claim 1 wherein the temperature of the walls of the mold cavity is less than 60°C.

6. The process according to claim 1 wherein the temperature at one part of the preform is different from the temperature at at least one other part of the preform, the temperature difference being from 0.5°C to 10°C.

7. The process according to claim 6 wherein the temperature at the part of the preform that will undergo greater stretch is higher than the temperature at the part of the preform that will undergo lower stretch.

8. The process according to claim 1 wherein the surface of the mold where the preform will undergo lower stretch is coated with a slip agent.

9. The process according to any of claims 1 to 8 wherein the preform is asymmetric.

10. The process according to claim 9 wherein the internal, hollow cross-section of the preform is non-circular, preferably oval.

11. The process according to any of claims 1 to 10 wherein the container has a degree of asymmetry of at least 1.5, preferably at least 2.

12. The process according to claim 11 wherein the container comprises a handle for gripping.

13. A stretch blow molded container comprising walls of a thermoplastic polyolefin, the thermoplastic polyolefin having a glass transition temperature of less than 30°C, preferably less than 15°C, and more preferably less than 5°C, **characterised in that** the container has a degree of asymmetry of at least 1.5.

14. The container according to claim 13 wherein the thermoplastic polyolefin is selected from polyethylene, polypropylene or co-polymers thereof.

15. The container according to claim 14 wherein the thermoplastic polyolefin is a random co-polymer comprising polypropylene, which has a T_{g} of between 0°C and -25°C.

16. The container according to any of claims 13 to 15 wherein the container further comprises a handle.
